# EUROPÄISCHE PATENTSCHRIFT

(11) **EP 2 997 543 B1**
(45) Veröffentlichungstag und Bekanntmachung des Hinweises auf die Patenterteilung: **03.04.2019**
(21) Anmeldenummer: 14725675.4
(22) Anmeldetag: 15.05.2014
(51) Int. Cl.: G06T 7/62, G06T 7/00, G06K 9/00, G06T 17/00, G06T 7/60

(54) **VORRICHTUNG UND VERFAHREN ZUM PARAMETRISIEREN EINER PFLANZE**
DEVICE AND METHOD FOR THE PARAMETERISATION OF A PLANT
DISPOSITIF ET PROCÉDÉ DE PARAMÉTRAGE D'UNE PLANTE

(30) Priorität: 16.05.2013 DE 102013209109
(43) Veröffentlichungstag der Anmeldung: 23.03.2016
(73) Patentinhaber: Fraunhofer-Gesellschaft zur Förderung der angewandten Forschung e.V., 80686 München (DE)
(72) Erfinder: SCHMITT, Peter, 91058 Erlangen (DE); UHRMANN, Franz, 91056 Erlangen (DE); KUBE, Matthias, 90762 Fürth (DE); KOSTKA, Günther, 91056 Erlangen (DE)
(74) Vertreter: Zinkler, Franz
(86) Internationale Anmeldenummer: PCT/EP2014/059949
(87) Internationale Veröffentlichungsnummer: WO 2014/184295

(56) Entgegenhaltungen:
- US-A- 4 710 876
- WOLFGANG H STUPPY ET AL: "Three-dimensional analysis of plant structure using high-resolution X-ray computed tomography", TRENDS IN PLANT SCIENCE, Bd. 8, Nr. 1, 1. Januar 2003 (2003-01-01), Seiten 2-6, XP055137776, ISSN: 1360-1385, DOI: 10.1016/S1360-1385(02)00004-3
- DORNBUSCH ET AL: "A method to extract morphological traits of plant organs from 3D point clouds as a database for an architectural plant model", ECOLOGICAL MODELLING, ELSEVIER, AMSTERDAM, NL, Bd. 200, Nr. 1-2, 2. Dezember 2006 (2006-12-02), Seiten 119-129, XP005792016, ISSN: 0304-3800, DOI: 10.1016/J.ECOLMODEL.2006.07.028

## Beschreibung

Die vorliegende Erfindung bezieht sich auf die Erfassung von Pflanzen und insbesondere auf die Parametrisierung von Pflanzen für die Agrartechnik.

Die Erfassung von Pflanzen ist in der Agrartechnik von Bedeutung, wobei hier die sogenannte Phänotypisierung von Pflanzen zu nennen ist. Für die dreidimensionale Erfassung von Objekten sind verschiedene Verfahren gebräuchlich, wie beispielsweise Streifenlichtverfahren oder Lichtschnittverfahren. Diese Verfahren bieten eine hohe räumliche dreidimensionale Auflösung. Sie sind jedoch bezüglich der Beleuchtung auf definierte Umgebungsbedingungen angewiesen. Beim Streifenlichtverfahren müssen nacheinander verschiedene Lichtmuster auf das Objekt projiziert werden, während beim Lichtschnittverfahren zu einem gegebenen Zeitpunkt nur eine Höhenlinie erfasst wird. Das Objekt muss also zur dreidimensionalen Erfassung abgescannt werden.

Eine Parameterextraktion und insbesondere eine modellbasierte Parameterextraktion sind besonders zur Phänotypisierung von Pflanzen nötig. Als Phänotypisierung wird die Ableitung einer strukturellen Beschreibung aus dem Erscheinungsbild einer Pflanze bezeichnet. Die Phänotypisierung ist aktuell Forschungsgegenstand in der modernen Agrarwissenschaft, da sie mittlerweile ein wichtiges Werkzeug in landwirtschaftlichen Bereichen, wie der Pflanzenzucht oder dem Pflanzenbau darstellt.

Zur Phänotypisierung sind zwei Schritte notwendig. Der erste Schritt besteht in der Erfassung. Zunächst erfasst ein Messsystem die strukturellen Eigenschaften einer Pflanze quantitativ. Für die schnelle automatisierte Aufnahme der Pflanzenstruktur eignen sich bildgebende Verfahren, wobei insbesondere für die Erfassung der Oberflächengeometrie einer Pflanze meist aktive oder passive typischerweise optische 3D-Erfassungsverfahren eingesetzt werden. Darunter fallen beispielsweise Laserlichtschnitt- oder Time-Of-Flight-Sensorsysteme bzw. stereoskopische Systeme mittels optischer Kameras. Der zweite Schritt besteht in der Merkmalsextraktion. Die gemessenen Werte entsprechen in der Regel nicht anschaulichen Merkmalen der Pflanzenstruktur. Im zweiten Schritt findet deshalb eine Transformation der Messwerte in relevante Merkmale statt. Da die erfasste Datenmenge im Allgemeinen sehr groß ist, findet in diesem Schritt üblicherweise eine Datenreduktion statt. Für die Ableitung komplexer Blattparameter aus einer gemessenen Punktwolke eignet sich aufgrund der flexiblen Anpassung an verschiedene Anwendungszwecke eine modellbasierte Merkmalsextraktion. Diese Parameter können beispielsweise dafür herangezogen werden, um die Auswirkungen in einer Veränderung am Genom der Pflanze auf deren Erscheinungsbild zu beschreiben.

In der EP2422297B1 ist ein Konzept dargestellt, bei dem eine Pflanze dreidimensional in Farbe erfasst wird und anschließend ein Blattmodell an die Messdaten angepasst wird. Das Blattmodell wird durch eine Anzahl von Parametern beschrieben. Die bei der Anpassung des Modells an die Messdaten berechneten Parameter dienen der Beschreibung der Pflanze. Hierdurch kann beispielsweise die Auswirkung einer Veränderung des Genoms der Pflanze auf die Wuchsform der Pflanze parametrisch beschrieben werden.

Beim Einsatz der bildgebenden optischen Messmethoden zur Erfassung der 3D-Struktur ist es problematisch, dass nur der optisch zugängliche Teil der Pflanze erfasst werden kann. Objektbereiche, die durch andere Teile verdeckt werden, können optisch nicht erfasst werden. Dies ist besonders bei der Erfassung von Pflanzen unerwünscht, da sich Blätter oft gegenseitig verdecken, wie es insbesondere bei dichtem Blattstand oder dicht bestockter Pflanzenstruktur vorkommt.

Fehlende Objektbereiche führen zu falschen Messwerten. Beispielsweise entspricht die ermittelte Blattfläche einer nur teilweise erfassten Pflanze nicht der tatsächlichen Blattfläche. Zum anderen macht eine nur teilweise erfasste Pflanze den Einsatz von komplexen Merkmalsextraktionsverfahren unter Verwendung eines modellbasierten Ansatzes unmöglich, wenn diese auf Vorbedingungen über vollständig erfasste Blätter aufbauen. Wirken sich beispielsweise Änderungen am Genom der Pflanze nur auf diejenigen Blätter aus, die optisch nicht zugänglich sind, kann der Einfluss der Änderung des Genoms auf die Wuchsform mit dieser Vorgehensweise nicht erfasst werden.

Generell kann man sagen, dass eine vollständige Erfassung mit optischen Mitteln bei Pflanzen, die nicht aus sehr wenigen Blättern bestehen, aufgrund von unvermeidbaren Verdekcungen unmöglich ist.

Die Fachveröffentlichung Dornbusch, T. et al., "A method to extract morphological traits of plant organs from 3D point clouds as a database for an architectural plant model", Ecological Modelling, Vol. 200, Issues 1-2, pages 119-129, 2007, offenbart ein Verfahren, bei dem prozessbasierte und dreidimensionale Strukturmodelle für spezielle Pflanzen mit funktional-strukturellen Pflanzenmodellen kombiniert werden, um die Interaktion von einzelnen Pflanzen oder Pflanzenstämmen mit ihrer biotischen und abiotischen Umgebung zu untersuchen.

Hierzu wird eine gemessene Punktwolke genommen und segmentiert. Ein Iterationsschritt beginnt damit, dass ein 3D-Plot angezeigt wird. Diese Figur wird durch Maus-Interaktion manuell gedreht, um eine klare visuelle Identifikation von Organen zu erhalten (z. B. nicht überlappenden Organkonturen).

Die Zuweisung von Punkten in der Punktwolke zu Organen wird durchgeführt, indem ein geschlossenes Polygon um die relevanten Punkte gezogen wird, und zwar unter Verwendung der Matlab-Funktion "inpolygon". Punkte innerhalb des Polygons werden von der Punktwolke entfernt, der Organ-bezogenen Punktwolke OPCⱼ zugeordnet und einem spezifischen Organ zugeordnet, in dem ein Identifikationsausdruck definiert wird, der topologische Informationen umfasst, beispielsweise Hauptstamm, Blatt Nr. 2. Diese Prozedur erlaubt es, gleichzeitig Punkte zu identifizieren und wegzuwerfen, die offensichtlich nicht zu der Pflanze gehören. Solche Bias-Punkte werden bei weiteren Berechnungen nicht berücksichtigt. Der Iterationsschritt j+1 startet wieder mit der reduzierten Punktwolke (PC). Die Iterationen werden fortgesetzt, bis alle Punkte in der PC entweder auf Organe bezogen sind oder weggeworfen sind.

Die Aufgabe der vorliegenden Erfindung besteht darin, ein verbessertes Konzept zum Parametrisieren einer Pflanze zu schaffen.

Diese Aufgabe wird durch eine Vorrichtung zum Parametrisieren einer Pflanze nach Patentanspruch 1, ein Verfahren zum Parametrisieren einer Pflanze nach Patentanspruch 11 oder ein Computerprogramm nach Patentanspruch 12 gelöst.

Die vorliegende Erfindung basiert auf der Erkenntnis, dass im Gegensatz zu unvollständigen optischen Erfassungen ein dreidimensionaler Datensatz der Pflanze zu erfassen ist, der nicht nur Volumenelemente von nach außen sichtbaren Elementen der Pflanze, sondern auch Volumenelemente von verdeckten Elementen der Pflanze aufweist. Zu diesem Zweck können beispielsweise computertomographische Verfahren, wie beispielsweise Röntgen-CT-Verfahren oder die Magnetresonanztomographie eingesetzt werden. Hierdurch wird die Pflanze vollständig erfasst, und die dabei entstehenden Messdaten beschreiben Einzelelemente, wie beispielsweise Blätter, Stiele, Zweige, Stämme, Blüten oder Früchte der Pflanze vollständig, unabhängig davon, ob das entsprechende Einzelelement durch ein anderes Einzelelement der Pflanze verdeckt worden ist oder nicht. Damit kann in einer anschließenden z.B. modellbasierten Parameterextraktion auch für verdeckte Teile der Pflanze eine korrekte Parametrisierung zur Beschreibung der Wuchsform der Pflanze durchgeführt werden.

Da die Röntgen-Computertomographie beispielsweise auf Röntgendurchstrahlungsbildern beruht, können Strukturen einer Pflanze, die optisch verdeckt sind, erfasst werden. Ähnliches gilt für die Magnetresonanztomographie und für andere Durchstrahlungsverfahren bzw. andere dreidimensionale vollständige Erfassungsverfahren. Es hat sich herausgestellt, dass die Röntgen-Computertomographie erlaubt, mittels einer geeigneten Konfiguration pflanzliche Strukturen kontrastreich und detailliert im Röntgenbild abzubilden, so dass die pflanzlichen Strukturen in der dreidimensionalen Rekonstruktion mittels eines Prozessors, der die verschiedenen Schichtbilder aufarbeitet, gut vom Hintergrund, der beispielsweise Luft ist, getrennt werden können.

Darüber hinaus wird es bevorzugt, die Parameterextraktion mittels modellbasierter Extraktion unter Verwendung eines allgemeinen oder speziellen Blattmodells durchzuführen, wobei ein allgemeines Blattmodell nicht für eine spezielle Blattform maßgeschneidert ist, während ein spezielles Blattmodell z.B. durch Vorwissen über die untersuchte Pflanze zusätzlich geprägt ist. So haben z.B. Tomaten einerseits oder Rüben andererseits deutlich unterschiedliche Blattformen, und daher kann es von Vorteil sein, wenn es von vorherein bekannt ist, dass die untersuchte Pflanze z.B. eine Tomate ist, das für Tomaten geeignete Blattmodell zu verwenden, während dann, wenn von vorherein bekannt ist, dass die zu untersuchende Pflanze eine Rübe ist, das Blattmodell für Rüben eingesetzt wird. Die modellbasierte Merkmalsextraktion ist darüber hinaus vorteilhaft, da sie den hohen Detailgrad der dreidimensionalen vollständigen Datenbeschreibung berücksichtigen kann, um vielfältige und präzise Blattmerkmale zu extrahieren. Zum anderen liefert dieses Konzept auch bei wenig detaillierten Messdaten zuverlässige Blattmerkmale. Wenige detaillierte Messdaten können z.B. dadurch erhalten werden, dass eine Computertomographie mit Röntgenstrahlen durchgeführt wird, bei denen die auf die Pflanze ausgestrahlte Röntgendosis relativ reduziert ist, z. B wenn eine geringere Ortsauflösung gewählt wird.

Bei einem bevorzugten Ausführungsbeispiel der vorliegenden Erfindung wird daher für die Gewinnung der Computertomographie-Daten ein Einsatz von Röntgenkameras mit entsprechend grober Pixelauflösung bevorzugt. Hierdurch kann die zur Gewinnung der Messdaten erforderliche Strahlungsdosis stark reduziert werden. Dies kann erforderlich sein, um insbesondere bei mehrfachen Messungen, z.B. zur Ermittlung des zeitlichen Verlaufs des Pflanzenwachstums eine Schädigung der Pflanzen durch die Röntgenstrahlung zu vermeiden. Eine Schädigung der Pflanze durch Röntgenstrahlung könnte sich auf das zu beobachtende Pflanzenwachstum auswirken, was zu vermeiden ist. Eine besonders niedrige Strahlungsdosis kann beispielsweise beim Einsatz von Röntgenkameras erreicht werden, bei denen ein Szintillatorschirm vorhanden ist, der die Röntgenstrahlung in sichtbares Licht wandelt, wobei das sichtbare Licht des Szintillatorschirms auf eine oder mehrere CCD-Kameras abgebildet wird. Durch analoges oder digitales Binning, also durch analoge oder digitale Addition benachbarter Pixelinformationen zu einem Superpixel kann die zur Bildgewinnung erforderliche Strahlungsdosis unter entsprechendem Verlust an Ortsauflösung stark reduziert werden. Nachdem CCD-Kameras jedoch eine sehr hohe Auflösung haben, ist eine Auflösungsreduktion der CCD-Kameras z.B. um den Faktor 10 oder um den Faktor 20 sehr unproblematisch, insbesondere wenn dann anschließend mittels modellbasierter Parameterextraktion die Pflanzenparameter gewonnen werden, zumal Vorwissen über die Pflanze bzw. die Pflanzenblätter bereits im zur Parameterextraktion verwendeten Modell Eingang gefunden hat.

Bei einem bevorzugten Ausführungsbeispiel der vorliegenden Erfindung wird die dreidimensionale Pflanzenstruktur zunächst durch ein Röntgen-CT-System oder durch ein Magnetresonanztomographie-System erfasst. Dann wird der volumetrische Datensatz in eine Wolke von dreidimensionalen Punkten umgewandelt, indem beispielsweise mittels des Marching-Cubes-Verfahrens oder eines alternativen Verfahrens, wie beispielsweise eines Schwellwertverfahrens eine explizite Isoflächendarstellung der Pflanzenoberfläche extrahiert wird. Bei einem weiteren Schritt werden dann die dreidimensionalen Punkte der Wolke von dreidimensionalen Punkten in Einzelelemente, wie beispielsweise Einzelblätter segmentiert, beispielsweise durch Finden von Punktclustern. Dies ist insbesondere bei der vollständig erfassten 3D-Rekonstruktionsdarstellung, die nicht nur die optisch zugänglichen, sondern auch die verdeckten Strukturen umfasst, wesentlich genauer und einfacher möglich als bei unvollständig erfassten Oberflächendaten. In einem weiteren Schritt werden dann die Blattparameter mittels eines generellen oder bereits für die einzelne Pflanze angepassten Modells extrahiert.

Weitere bevorzugte Ausführungsbeispiele der vorliegenden Erfindung sind in den abhängigen Ansprüchen dargestellt.

Nachfolgend werden Bezug nehmend auf die beiliegenden Zeichnungen Ausführungsbeispiele der vorliegenden Erfindung detailliert erläutert. Es zeigen:
- Fig. 1: ein Blockdiagramm der Vorrichtung zum Parametrisieren einer Pflanze;
- Fig. 2a: ein Blockdiagramm einer bevorzugten Implementierung des Aufzeichners von Fig. 1;
- Fig. 2b: eine Darstellung eines bevorzugten Aufbaus der Röntgen-Kamera von Fig. 2a;
- Fig. 3: ein Blockschaltbild einer bevorzugten Implementierung des Parametrisierers von Fig. 1;
- Fig. 4: eine bevorzugte Anwendung der extrahierten Parameter am Beispiel eines Phänotypisierers;
- Fig. 5: eine bevorzugte Implementierung des Segmentierers von Fig. 3;
- Fig. 6: eine bevorzugte Implementierung des Einzelelement-Modell-Anpassers von Fig. 3;
- Fig. 7a: eine Darstellung der dreidimensionalen Punktwolke der Pflanzenoberfläche, wie sie z.B. durch den Punktwolkenumwandler von Fig. 3 erhalten wird;
- Fig. 7b: eine vergrößerte Polygondarstellung eines Blatts, wie es durch den Punktwolkenumwandler von Fig. 3 erhalten wird, wenn dieser das Marching-Cubes-Verfahren anwendet; und
- Fig. 8: eine zweidimensionale Darstellung einer CT-Volumendarstellung, also einer vollständigen Volumendarstellung mit verdeckten Strukturen einer Pflanze, wie sie von dem Aufzeichner von Fig. 1 beispielsweise erhalten wird.

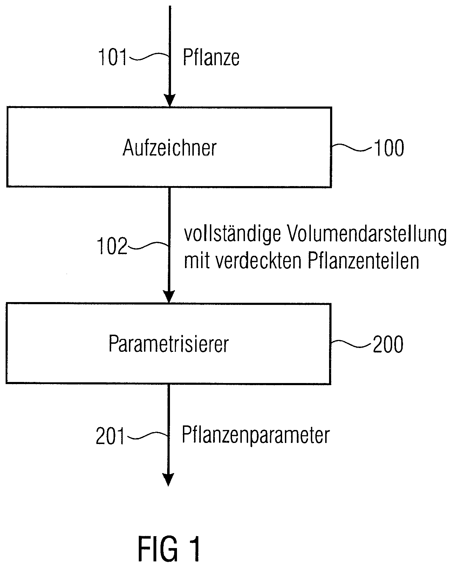

Fig. 1 zeigt eine Vorrichtung zum Parametrisieren einer Pflanze. Ein Aufzeichner 100 ist ausgebildet, um einen dreidimensionalen Datensatz einer Pflanze 101 aufzuzeichnen. Der dreidimensionale Datensatz hat nicht nur Volumenelemente von nach außen bzw. optisch sichtbaren Elementen der Pflanze, sondern umfasst auch Volumenelemente von verdeckten Elementen der Pflanze. Der dreidimensionale Datensatz erfasst somit nicht nur eine Darstellung unverdeckter Elemente der Pflanze, sondern auch Volumenelemente von durch andere Pflanzenelemente verdeckten Elementen der Pflanze. Dieser Datensatz wird auch als vollständiger Datensatz bezeichnet.

Diese vollständige Volumendarstellung, die z.B. als Voxel-Gitter gegeben sein kann, wobei jedes Voxel sowohl eine dreidimensionale Koordinate bezogen auf eine Ursprungskoordinate als auch wenigstens einen oder mehrere Intensitätswerte aufweist, wird dann in einen Parametrisierer 200 eingespeist, der ausgebildet ist, um den dreidimensionalen Datensatz, beispielsweise das Voxel-Gitter zu parametrisieren, um Pflanzenparameter 201 zu erhalten. Die vollständige Volumendarstellung, also die Volumendarstellung 102 mit unverdeckten und verdeckten Pflanzenteilen wird also durch den Parametrisierer 200 in Pflanzenparameter 201 umgewandelt. Damit wird die für die Phänotypisierung beispielsweise nötige Datenreduktion auf relevante Pflanzenparameter erreicht. Wenn beispielhaft davon ausgegangen wird, dass der Aufzeichner eine Volumendarstellung mit 1000 Elementen in der Länge, 1000 Elementen in der Breite und 1000 Elementen in der Höhe liefert, so hat die Volumendarstellung 10⁹ Voxel. Wenn ferner z.B. davon ausgegangen wird, dass die Pflanze 10 Blätter umfasst, und für jedes der 10 Blätter z.B. 10 Parameter gewonnen werden, so werden aus den 1 Milliarde Voxeln am Ausgang des Blocks 100 von Fig. 1 lediglich 100 Parameterwerte am Ausgang des Blocks 200.

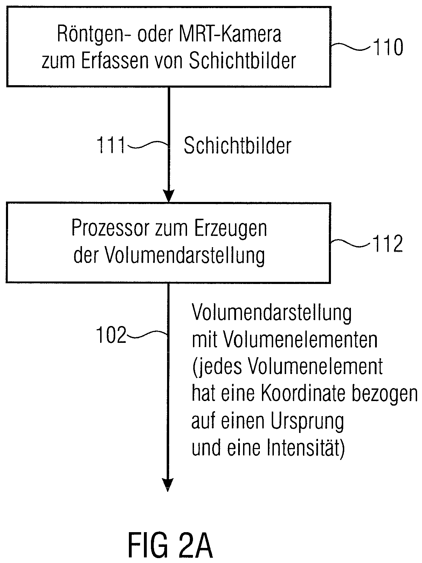

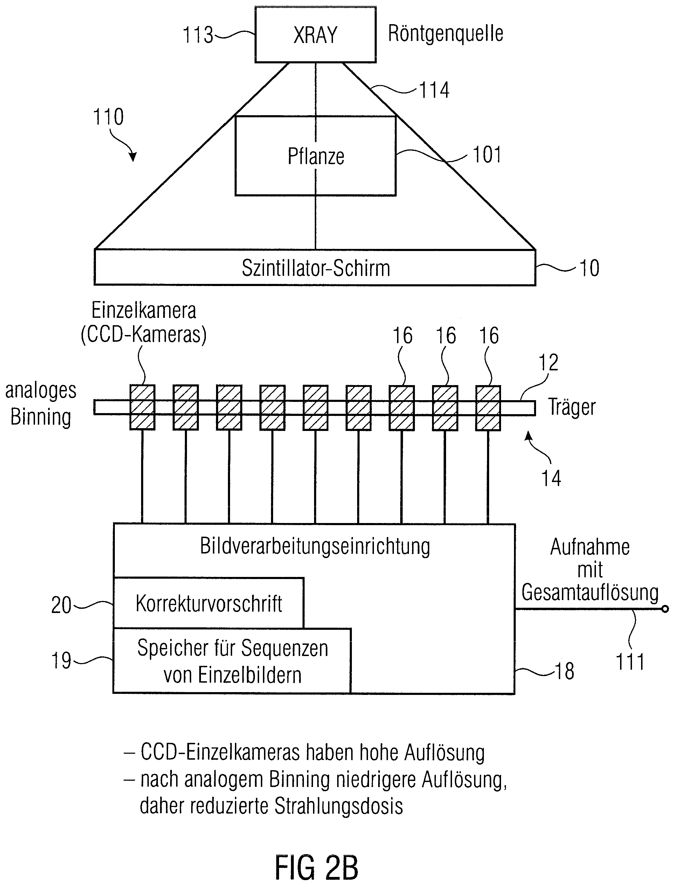

Fig. 2a zeigt eine Implementierung des Aufzeichners 100 von Fig. 1. Insbesondere ist der Aufzeichner 100 von Fig. 1 ausgebildet, um ein Röntgen-CT-Verfahren oder ein Magnetresonanztomographie-Verfahren auszuführen, um die dreidimensionale Volumendarstellung zu erhalten. Hier liefert ein Röntgen- oder MRT-System 110 die Volumendarstellung 102 bzw. 111 in Fig. 2b. Die Volumendarstellung hat einzelne Volumenelemente, wobei jedes Volumenelement eine Koordinate bezogen auf ein und denselben Ursprung und vorzugsweise nur eine einzige Intensität aufweist. Fig. 2b zeigt eine bevorzugte Implementierung einer Röntgenkamera 110 von Fig. 2a. Die Röntgenkamera umfasst eine Röntgenquelle 113, die Röntgenstrahlen 114 durch eine Pflanze 101 hindurch strahlt. Die Röntgenstrahlen gelangen auf einen Szintillatorschirm 10. Die Kamera umfasst ferner einen Kameraträger 12 mit einem Array von Kamerabefestigungen 14. Die Kamerabefestigungen sind ausgebildet, um in einer Kamerabefestigung eine Einzelkamera 16 befestigen zu können. Vorzugsweise ist der Kameraträger 12 als Platte mit in einem vorbestimmten Muster angeordneten Bohrungen ausgebildet, wobei an jeder Bohrung z.B. eine Justierschraube vorgesehen ist, um eine zylindrische Kamera, deren Durchmesser etwas kleiner als der Durchmesser der Bohrung ist, in die Bohrung einzusetzen und mittels einer Justierschraube zu justieren. Alternative Möglichkeiten sind ebenfalls verwendbar, beispielsweise Kameraträger mit leicht konischen Bohrungen, um Einzelkameras mit einem leicht konischen Außendurchmesser in den konischen Bohrungen zu platzieren, so dass keine Justierschrauben oder sonstige Befestigungen nötig sind, da lediglich der Einpressdruck der Kamera in den Kameraträger ausreichend ist.

Die Kamera umfasst ein Array von optischen Einzelkameras 16, wobei jede optische Einzelkamera an einer zugeordneten Kamerabefestigung 14 angebracht ist. Jede Einzelkamera umfasst ferner einen Lichtsensor und vorzugsweise eine Optikabbildungseinrichtung, wobei der Lichtsensor und die Optikabbildungseinrichtung wirksam sind, um eine Teilfläche der Schirmfläche des Schirms 10 mit einer bestimmten Auflösung aufzunehmen. Jede Einzelkamera 16 liefert somit ein Einzelbild mit einer bestimmen Auflösung.

Es sei darauf hingewiesen, dass Optikanordnungen beliebig umgesetzt werden können. Aus Kostengründen wird als Optikanordnung eine Linsenanordnung bevorzugt, die je nach Ausführung eine oder mehrere Linsen umfassen kann. Alternative Optikanordnungen umfassen Spiegelanordnungen, Fiberoptiken, etc. oder auch eine Kombination verschiedener optischer Abbildungseinrichtungen.

Die Kamera umfasst ferner eine Bildverarbeitungseinrichtung 18 zum Bearbeiten der digitalen Einzelbilder des Arrays von optischen Einzelkameras 16, um die optische Aufnahme des Schirms mit der vorbestimmten Gesamtauflösung zu erzeugen. Im Einzelnen ist die Bildverarbeitungseinrichtung 18 wirksam, um die digitalen Einzelbilder einer Korrektur zu unterziehen, um Ausrichtungsungenauigkeit und/oder Parameterschwankungen in dem Array von optischen Einzelkameras 16 zu reduzieren und vorzugsweise komplett zu eliminieren. Für die Korrektur eines Einzelbildes wird bei einer Kalibrierung, die einer Aufnahme vorausgeht, eine bestimmte Korrekturvorschrift 20 verwendet, die typischerweise in der Bildverarbeitungseinrichtung 18 auf einem geeigneten Speichermedium abgespeichert ist oder sogar fest verdrahtet ist. So findet die Korrektur mit der bei der Kalibrierung bestimmten Vorschrift mit einer Korrekturauflösung statt, die höher als die vorbestimmte Gesamtauflösung der am Ende gewünschten optischen Gesamtaufnahme ist, und die niedriger oder gleich der Einzelauflösung ist, mit der die optischen Einzelkameras Einzelbilder liefern, obgleich dies nicht wesentlich ist. Die Bildverarbeitungseinrichtung ist schließlich wirksam, um korrigierte Einzelbilder oder ein korrigiertes Gesamtbild zu erhalten. Das Zusammensetzen der Einzelbilder zu dem Gesamtbild kann somit nach der Korrektur der Einzelbilder mit der für jedes Einzelbild, d.h. heißt für jede Einzelkamera bestimmten Korrekturvorschrift stattfinden. Am Ausgang der Bildverarbeitungseinrichtung 18 wird somit nach der CT- bzw. MRT-Rekonstruktion eine Volumenaufnahme mit allen Informationen, also auch mit den verdeckten Strukturen erhalten. Es wird bei dieser Implementierung ausgenutzt, dass durch den Einsatz mehrerer Kameras die zur Verfügung stehenden Bildelemente (Pixel) proportional zur Anzahl der Kameras wachsen. Häufig wird jedoch keine größere Pixelanzahl benötigt als diejenige, die eine einzige Kamera liefern würde. Werden nunmehr beispielsweise vier optische Kameras eingesetzt, können in diesem Fall jeweils vier Pixel aufaddiert werden. Besonders vorteilhaft ist dies, wenn die Ladung bereits auf dem Sensor aufaddiert werden kann, wie es bei CCD-Sensoren durch das sogenannte analoge Binning geschieht. In diesem Fall muss die Ladung nur einmal elektronisch ausgelesen werden, und es entsteht somit nur einmal das durch diesen Vorgang erzeugte elektronische Rauschen. Damit wird das insgesamte Signal/Rausch-Verhältnis besser, als wenn jedes Pixel einzeln ausgelesen wird und digital addiert wird.

Aufgrund der Tatsache, dass das Signal/Rausch-Verhältnis durch das analoge Binning wesentlich erhöht wird, kann damit die Dosis der Röntgenquelle 113 reduziert werden, um wiederum zu einem geforderten Signal/Rausch-Verhältnis am Ausgang der Einzelkameras, die ein analoges Binning durchführen, um aus einzelnen Pixeln örtlich schlecht aufgelöstes Superpixel zu erhalten.

Die einzelnen CCD-Kameras haben somit eine hohe Auflösung. Nach dem analogen Binning wird eine niedrigere Auflösung erhalten, jedoch mit einem stark verbesserten Signal/Rausch-Verhältnis, so dass die Strahlendosis der Röntgenquelle 113 entsprechend reduziert werden kann, um insbesondere dann, wenn mehrere Aufnahmen der Pflanze nötig sind, die Pflanzen zu schonen bzw. sicherzustellen, dass eine Schädigung der Pflanze durch die Röntgenstrahlung im Hinblick auf das zu beobachtende Pflanzenwachstum ausgeschlossen wird.

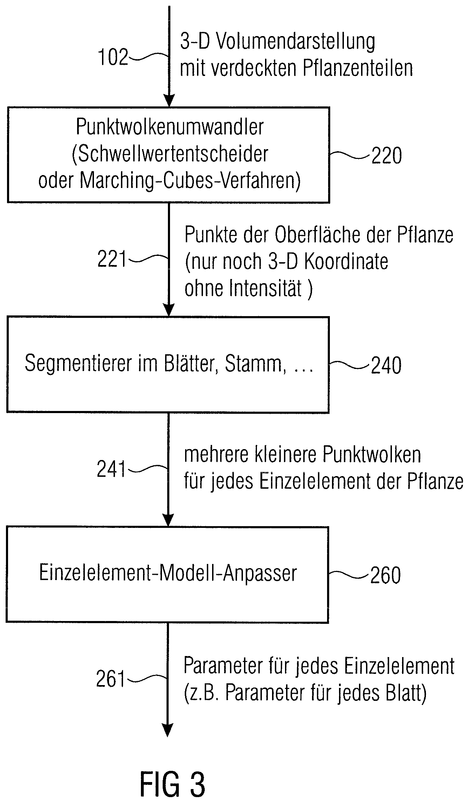

Bei dem in Fig. 2b gezeigten Ausführungsbeispiel, das insgesamt die Röntgenkamera 110 darstellt, ist der Schirm 10 ein Szintillator-Schirm, in dem Röntgenlicht in sichtbares Licht umgewandelt wird. Hinter dem Szintillator-Schirm 10 befindet sich das Array der Einzelkameras 16, wobei jede Einzelkamera jeweils einen Teil des Szintillator-Schirms aufnimmt bzw. abbildet. Für spezielle Aufgaben, bei denen gewöhnlich eine Zeilenkamera eingesetzt wird, degeneriert das Array von optischen Einzelkameras zu einem eindimensionalen Array, das eine lineare Anordnung optischer Einzelkameras umfasst. Die von den einzelnen optischen Kameras abgebildeten Bereiche können entweder unmittelbar aneinander angrenzen oder überlappen sich geringfügig, um den Justage-Aufwand, der typischerweise auf mechanischer Seite anfallen wird, zu reduzieren. Haben die Teilbilder bzw. Einzelbilder eine Überlappung, so wird es bevorzugt, eine elektronische Korrektur durchzuführen, wie es bereits dargestellt worden ist. Bezüglich weiteren Ausgestaltungen der Kamera wird auf die EP 1586193 B1 verwiesen, die hierin durch Bezugnahme aufgenommen ist. Fig. 3 zeigt eine Implementierung des Parametrisierers 200 gemäß einem bevorzugten Ausführungsbeispiel der vorliegenden Erfindung.

Der Parametrisierer umfasst einen Punktwolkenumwandler 220, einen Segmentierer 240 und einen Einzelelement-Modell-Anpasser 260. Der Punktwolkenumwander 220 ist ausgebildet, um die dreidimensionale Volumendarstellung 102 mit verdeckten und unverdeckten Pflanzenelementen zu empfangen. Der Punktwolkenumwander 220 erzeugt aus den einzelnen Voxel-Elementen eine Punktwolke 221, die Punkte auf einer Oberfläche der Pflanze aufweist. Jeder Punkt ist nunmehr nur noch durch seine Koordinate dargestellt, die von der Koordinate eines entsprechenden Volumenelements abgeleitet ist oder dieser entspricht. In einer der Implementierungen besteht die Ableitung der Koordinate eines Punkts der Punktwolke 221 darin, dass der Mittelpunkt bzw. Schwerpunkt eines Volumenelements als Koordinate des Punkts genommen wird. Die Punktwolke 221 muss jedoch nicht einer 1:1-Übereinstimmung mit einzelnen Volumenelementen entsprechen. Stattdessen wird, beispielsweise beim Marching-Cubes-Verfahren auch eine Interpolation vorgenommen, so dass dann, wenn bestimmt wird, dass zwei benachbarte Pixel so sind, dass das ein Pixel ein Luftpixel ist und das andere Pixel ein Pflanzenpixel ist, unter bestimmten Voraussetzungen, wie sie in der Technik bekannt sind, eine Interpolation zwischen diesen beiden Voxeln durchgeführt wird, wobei die Punktwolke dann durch interpolierte Volumenelemente dargestellt ist. Eine Ableitung der Koordinaten eines Volumenelements kann somit auch eine Interpolation von benachbarten Volumenelementen sein. Das Marching-Cubes-Verfahren ist ein bekannter Algorithmus zur Berechnung von Isoflächen in der 3D-Computergraphik. Er nähert eine Voxelgraphik durch eine Polygongraphik an. Die erste Beschreibung befindet sich in "William E. Lorensen, Harvey E. Cline: "Marching Cubes: A High Resolution 3D Surface Construction Algorithm", Computer Graphics, Vol. 21, Nr. 4, Juli 1987, Seiten 163-169.

Es können jedoch auch alternative Vorgehensweisen im Punktwolkenumwandler genommen werden, wie beispielsweise eine einfache Schwellwertentscheidung anhand der Intensität. So stellt eine höhere Intensität eines Volumenelements dar, dass hier Luft war, während eine niedrigere Intensität eines Volumenelements zum Ausdruck bringt, dass hier in der Pflanze bereits eine Absorption der Röntgenstrahlung stattgefunden hat und es sich hiermit somit um ein Volumenelement handelt, das zur Pflanze bzw. zur Pflanzenoberfläche gehört. Eine Schwellwertentscheidung würde daher darin bestehen, sämtliche Volumenelemente, die eine Intensität größer als einen bestimmten Wert haben, zu eliminieren, so dass nur noch die Volumenelemente verbleiben, die zu einem Pflanzenelement gehören.

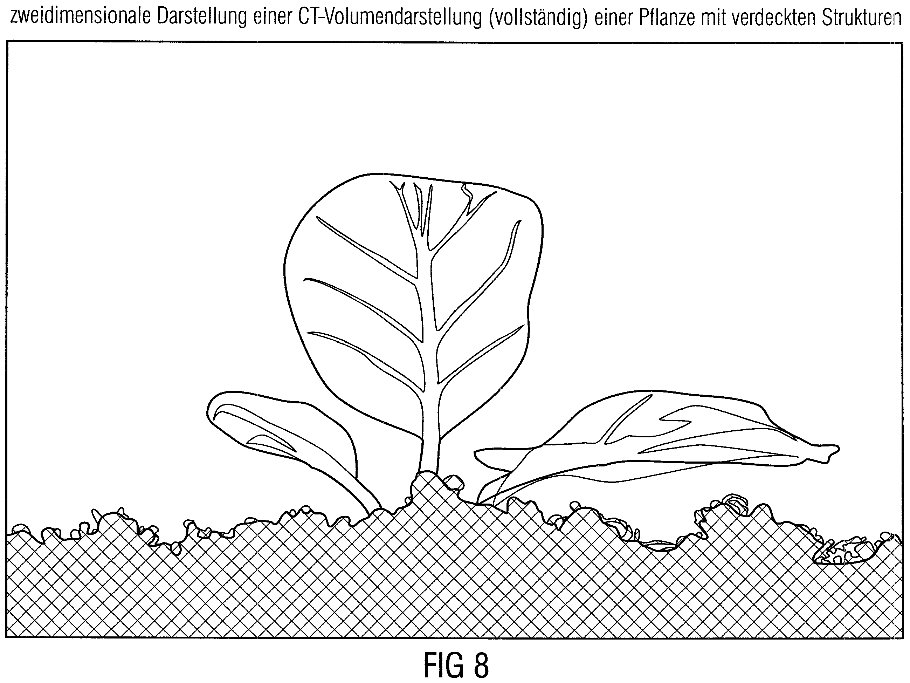

Insbesondere bei Blättern oder flachen Pflanzenelementen stellen die Voxel bereits nahezu eine Oberfläche dar, da ein Blatt typischerweise eine Dicke von einem oder wenigen Voxeln haben wird. Andere Blattstrukturen, wie z. B. das in Fig. 8 deutlich sichtbare Blattgerippe, das auch Blattadern genannt wird, haben eine volumetrische Struktur und nicht eine Flächenstruktur. Auch das Blattgerippe kann bereits wertvolle Parameter ergeben, die zur Phänotypisierung nützlich sind. Dann wird aus den volumetrischen Daten direkt oder nach Punktwolkenumwandlung eine Segmentierung und Parameterextraktion durchgeführt, um das Pflanzengerippe parametrisch zu beschreiben.

Das Ergebnis des Punktwolkenumwandlers 220 besteht in einer Wolke von dreidimensionalen Punkten, die entweder als einzelne Punkte gegeben sein können, oder bereits, wie es im Marching-Cubes-Verfahren der Fall ist, eine explizite Isoflächendarstellung bzw. Polygonflächendarstellung der Pflanzenoberfläche sein können. Das Marching-Cubes-Verfahren wird insbesondere deswegen bevorzugt, weil es zusätzlich zur Unterscheidung zwischen Volumenelementen von Pflanze einerseits und als Hintergrund andererseits auch eine Interpolation durchführt und somit gerade die Grenze bzw. Grenzfläche zwischen Pflanze und Hintergrund, also Luft angibt. Bei der bevorzugten Implementierung des Punktwolkenumwandlers wird somit aus dem kompletten Volumendatensatz eine komplette Oberfläche der Pflanze vor dem Hintergrund erhalten, wobei diese Oberfläche sämtliche Blätterstiele, Zweige, etc. umfasst.

Diese Flächendarstellung wird dann in den Segmentierer 240 eingespeist, der ausgebildet ist, um die dreidimensionale Punktwolke, wie sie vom Block 220 erhalten wird, in Einzelelemente umzuwandeln, wie es bei 241 dargestellt ist. Die Einzelelemente können je nach Implementierung mehrere kleinere Punktwolken für z.B. ein Blatt, einen Stiel, einen Stamm, einen Zweig, eine Blüte oder eine Frucht der Pflanze sein, oder können bereits Polygonflächen, in welcher Darstellung auch immer, sein.

Die segmentierte Darstellung 241 wird dann in den Einzelelement-Modell-Anpasser 260 eingespeist, der ausgebildet ist, um unter Verwendung eines allgemeinen oder bereits durch Vorwissen über die Pflanze spezifizierten Einzelelement-Modells die Parameter für jedes Einzelelement zu extrahieren, und zwar durch Anpassen des Einzelelement-Modells an das entsprechende segmentierte Einzelelement.

Der Einzelelement-Modell-Anpasser liefert ausgangsseitig die Parameter 260 für jedes Einzelelement, z.B. die Parameter für jedes Blatt. Je nach Implementierung der vorliegenden Erfindung und Anwendung können die Parameter insbesondere für ein Blatt, eine Blattlänge, eine Blattbreite, eine Blattfläche, eine Neigung des Blatts bezüglich des Stiels, eine Ausrichtung des Blatts bezüglich einer Pflanzenhauptachse, also in der Draufsicht eine Ausrichtung nach oben, unten, links oder rechts etc., eine Verdrehung bezüglich einer Blattachse, eine Blattwölbung, eine Blattform oder eine Blattumrandung sein. Weitere Parameter sind insbesondere Hinweise auf Fehler in der Blattumrandung, beispielsweise durch Schädlingsbefall, etc. Weitere nützliche Pflanzenparameter umfassen Wellungen am Rand oder in der Fläche des Blatts, eine Faltung der Blatthälften, oder eine Einrollung des Blatts entlang oder quer zur Blattachse.

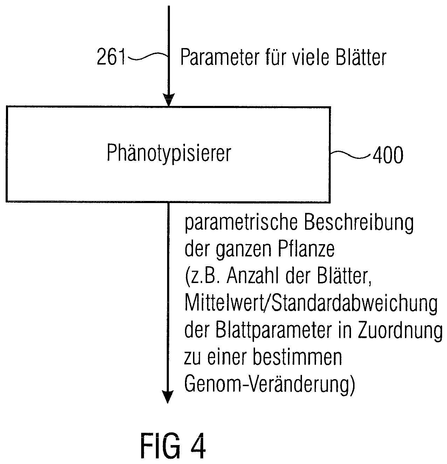

Die in Fig. 3 gewonnenen Parameter 261 für viele Blätter können dann in einen Phänotypisierer 400 eingespeist werden. Der Phänotypisierer 400 liefert eine parametrische Beschreibung der ganzen Pflanze, die als Werte beispielsweise die Anzahl der Blätter, den Mittelwert und/oder die Standardabweichung der einzelnen Blattparameter in Zuordnung zu einer bestimmen Genom-Veränderung, beispielsweise angibt. Daher ist es für einen Agrarwissenschaftler nunmehr möglich, anhand der parametrischen Beschreibung der ganzen Pflanze am Ausgang des Blocks 400 von Fig. 4 eine einfache Zuordnung und Erkenntnis dahin gehend zu gewinnen, welche Genom-Veränderung zu welcher Auswirkung auf Blattausrichtung, Blattfläche etc. führt. Insbesondere ist die Blattausrichtung dahin gehend von großem Interesse, weil eine Ausrichtung näher zur Sonne bzw. im optimalen rechten Winkel zur Sonne eine hohe Photosynthese-Aktivität des Blatts bedingt, und damit zu einem größeren und schnelleren Wuchs des Blatts.

Obgleich in Fig. 3 eine Implementierung dargestellt worden ist, bei der die Segmentierung nach der Punktwolkenumwandlung erfolgt, kann bei einer anderen Implementierung alternativ oder zusätzlich eine Segmentierung direkt mit der dreidimensionalen Darstellung erfolgen, um dann die segmentierten Elemente in eine Punktwolke umzuwandeln, die nur noch aus einem Einzelelement besteht, oder um direkt das noch aus Voxeln bestehende Einzelelement zu parametrisieren. Zur Segmentierung des dreidimensionalen Datensatzes kann beispielsweise ausgenutzt werden, dass Stiele von Blättern normalerweise dünner als das Blatt sind, so dass eine Segmentierung durch "Abschneiden" oder "Auftrennen des Datensatzes an einer dünnen Stelle erfolgen kann.

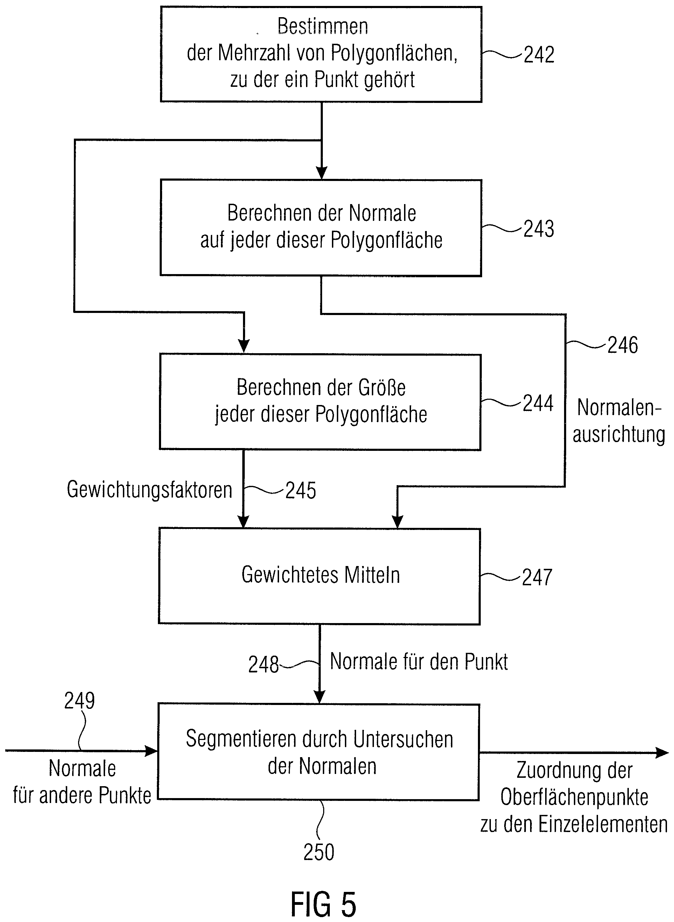

Fig. 5 zeigt ein Flussdiagramm für eine bevorzugte Implementierung des Segmentierers 240 von Fig. 3. In einem Schritt 242 wird eine Mehrzahl von Polygonflächen bestimmt, zu der ein Punkt der Punktwolke 221 gehört. In einem Schritt 243 wird dann eine Normale auf jeder dieser Polygonflächen berechnet. Die Polygonflächen sind Dreiecksflächen oder Flächen mit mehr Ecken, beispielsweise vier, fünf, sechs, ... Ecken. Eine Normale auf der Polygonfläche wird dazu verwendet, um die Ausrichtung dieser Polygonfläche zu quantifizieren. Hierauf wird in einem Schritt 244 die Größe jeder dieser Polygonflächen berechnet.

Die Größe jeder Polygonfläche führt zu einer entsprechenden Gewichtung bzw. zu einem entsprechenden Gewichtungsfaktor 245, der dieser Polygonfläche zugeordnet ist, während die einzelnen Normalen auf den entsprechenden Polygonflächen bei 246 gezeigt sind. Sowohl die Gewichtungsfaktoren 245 als auch die Normalen 246 werden in dem Schritt 247 eingesetzt, um eine gewichtete Mittelung der einzelnen Flächennormalen 246 durchzuführen. Je größer die Fläche einer Polygonfläche ist, umso höher ist der Gewichtungsfaktor für diese Polygonfläche, so dass in dem Schritt der gewichteten Mittelung 247 die Polygonflächen bzw. die Normalen der Polygonflächen einen stärkeren Einfluss haben, für die eine höhere Größe berechnet worden ist. Dadurch wird eine Normale 248 für jeden Punkt der Punktwolke 221 von Fig. 3 erhalten. Anhand der Betrachtung der Normalen für die entsprechenden Punkte, und insbesondere auch für benachbarte Punkte, wie es bei 249 dargestellt ist, wird dann in dem Schritt 250 die tatsächliche Segmentierung durchgeführt, in dem die einzelnen Normalen für benachbarte Punkte untersucht werden.

Im Schritt 244, wo die Mehrzahl der Polygonflächen bestimmt wird, zu der ein Punkt gehört, kann eine Kugel mit einem bestimmten Durchmesser um einen Punkt herum gebildet werden, um sämtliche Polygonflächen zu erhalten, zu denen ein Punkt gehört. Alternativ kann auch ein Kreis gebildet werden, wenn ein zweidimensionaler Bereich der Pflanzenoberfläche vorliegt, wie es für Oberflächen oftmals der Fall sein wird. Darüber hinaus sei darauf hingewiesen, dass der Schritt des Mittelns 247 je nach Implementierung auch ungewichtet durchgeführt werden kann, so dass dann die Größe der Polygonflächen nicht zwingend in die Berechnung eingeht.

Im Schritt 250 des Segmentierens können die einzelnen Normalen benachbarter Punkte untersucht werden, wobei je nach Implementierung eine Schwellwertentscheidung oder ein aufwendigeres Verfahren eingesetzt werden kann. Eine Möglichkeit besteht darin, zwischen benachbarten Punkten Differenzen der Normalenausrichtung zu berechnen, um dann, wenn die Differenz innerhalb einer bestimmten Abweichung ist, zu bestimmen, dass die Punkte zur selben Oberfläche gehören, während dann, wenn die Differenzen zwischen benachbarten Punkten größer als eine Abweichung gemäß einen bestimmten Schwellwert ist, zu unterschiedlichen Einzelelementen gehören. Wenn man beispielsweise ein Blatt betrachtet, das an einem Stiel angeordnet ist, so wird gerade an der Stelle, an der das Blatt aus dem Stiel austritt, eine sehr deutliche Normalenänderung sein, weil hier eine spezielle Kante vorliegt. Andererseits haben Blätter typischerweise auch Blattwölbungen, so dass bestimmte Abweichungen von Punkt zu Punkt der Blattnormalen, wenn diese langsam bzw. relativ langsam stattfinden, darauf hindeuten, dass alle diese Punkte zu einem speziellen Blatt gehören. Je nach Blatt und Aufwand können weitere Kriterien mit einbezogen werden, wie beispielsweise Vorwissen über eine erwartete Blattform etc., um damit die Plausibilität der Segmentierungsentscheidung im Block 250 zu überprüfen und zu verifizieren und ggf. eine Entscheidung zu korrigieren.

Beim Marching-Cubes-Verfahren liegt beispielsweise bereits eine Polygondarstellung vor. Falls dies nicht der Fall ist, kann trotzdem mit Normalen gearbeitet werden. Hierzu wird um einen Punkt die lokale Nachbarschaft mit einer Kugel um den Punkt gefunden. Alle Punkte, die in der Kugel mit definiertem Radius sind, bilden diese lokale Nachbarschaft. Dann wird in diese Nachbarschaft eine Ebene gefittet, und die Normale auf diese Ebene ist dann die dem Punkt zugeordnete Normale. Dann wird die Segmentierung aufgrund der Normalen wie beschrieben durchgeführt.

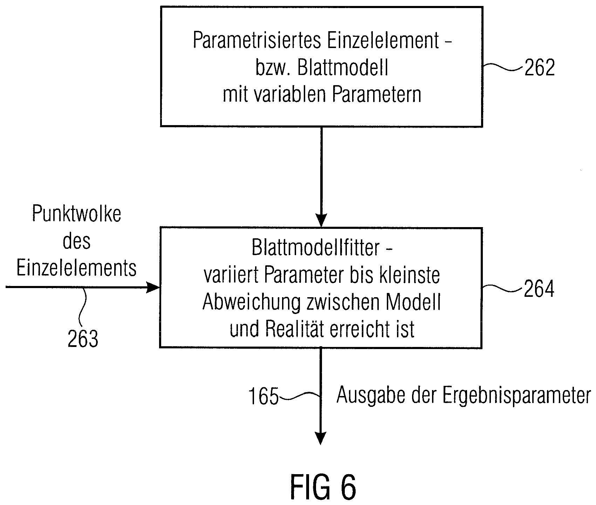

Fig. 6 zeigt eine bevorzugte Implementierung des Einzelelement-Modell-Anpassers 260 von Fig. 3. So wird ein parametrisiertes Einzelelement bzw. ein Blattmodell mit variablen Parametern für ein besonderes Einzelelement in einem Block 262 bereitgestellt. Hierauf wird das Modell aus dem Block 262 zusammen mit der Punktwolke 263, die durch den Schritt 250 von Fig. 5 erhalten worden ist, in einen Blattmodellfitter 264 eingespeist. Der Blattmodellfitter ist ausgebildet, um die Parameter des im Block 262 bereitgestellten Modells so lange nach bestimmten Optimierungskriterien zu variieren, bis eine kleinste Abweichung zwischen dem Modell und der Realität, also der Punktwolke 263 des Einzelelements erreicht ist. Insbesondere kann eine Variation der variablen Parameter dahin gehend stattfinden, dass z.B. nach der Methode der kleinsten Fehlerquadrate eine kleinste Abweichung zwischen den einzelnen Punkten des parametrisierten Modells und der Punktwolke 263 des Einzelelements erreicht ist. Das Ergebnis besteht dann in den Parametergrößen 265, die beim Blattmodellfitten 264 herausgekommen sind. Diese Ergebnisparameter können dann ausgegeben werden, und stellen die Pflanzenparameter 201 von Fig. 1 dar. Andere Blattmodellfitting-Verfahren können eingesetzt werden, wie beispielsweise Modelle, die im Sinne eines an entsprechenden Stützpunkten fixierten "Gummibandes" arbeiten, dahin gehend, dass auch Abweichungen am Blattrand oder in der Blattfläche bezüglich einer erwarteten Geometrie erhalten werden, die man bei einem einfacheren Modell nicht erfassen könnte. Wenn beispielsweise ein Blatt, z.B. aufgrund eines Schädlingsbefalls eine Einkerbung hat, die z.B. dadurch hervorgerufen worden ist, dass Schädlinge das Stück des Blatts am Rand entfernt haben, so würde ein solches Modell diesen Rand bzw. diese Abweichung von der optimalen Geometrie ebenfalls parametrisieren. Ein solches Modell hat im Gegensatz zu einem einfacheren Modell mit erwarteter Blattgeometrie zusätzlich noch freie Parameter, bzw. es können im Optimierungsprozess zusätzliche Parameter eingesetzt werden, so dass die Anzahl der ausgegebenen Parameter bei einem solchen Modell von der Punktwolke des Einzelelements 263 abhängt und nicht von vorherein vorgegeben ist. Weitere Fitting-Verfahren, die alternativ zu den zwei vorher beschriebenen Verfahren arbeiten, können ebenfalls eingesetzt werden, um die Ergebnisparameter 201 von Fig. 1 zu erhalten.

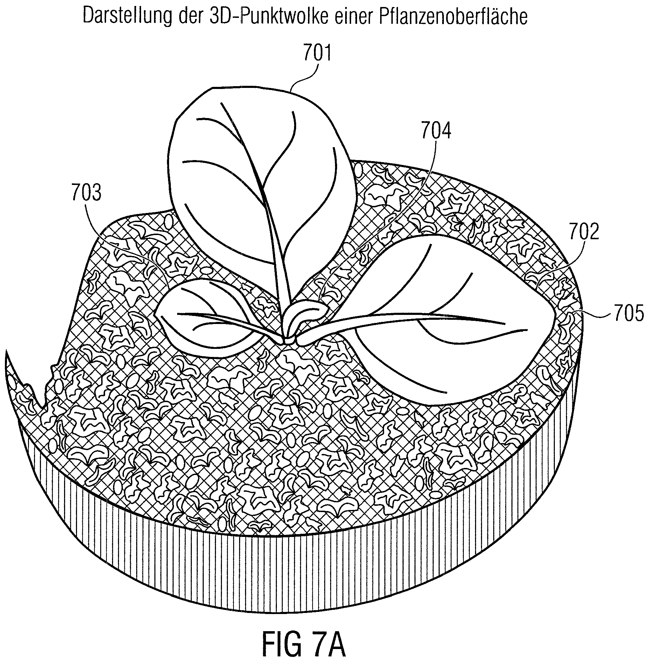

Fig. 7a zeigt eine Darstellung der 3D-Punktwolke einer Pflanzenoberfläche, wie sie am Ausgang des Blocks 220 von Fig. 3 erhalten worden ist. Hier sind deutlich vier Blätter 701, 702, 703, 704 zu sehen, die bereits vom Hintergrund separiert sind. Die in Fig. 7a dargestellte dreidimensionale Punktwolke ist jedoch noch nicht in die einzelnen Blätter segmentiert. Ferner ist auch das Wachstumssubstrat, also beispielsweise die Erde 705 ebenfalls nicht segmentiert. Die Erde 705 kann jedoch z.B. anhand der nötigen Geometrieparameter, also anhand von Höhen-Werten, die unter einem bestimmten Schwellwert sind, ohne Weiteres eliminiert werden, wenn dies nötig ist.

Dagegen zeigt Fig. 8 eine zweidimensionale Darstellung einer kompletten CT-Volumendarstellung mit verdeckten und unverdeckten Strukturen für die in Fig. 7a gezeigte Pflanze, wobei ebenfalls wieder deutlich die vier Blätter zu sehen sind. Bei komplizierteren Pflanzen, wo ein dichter Blattstand dahin gehend existiert, dass in jeder Blickrichtung Blattelemente verdeckt sind, würde die komplette Rekonstruktion im Sinne von Fig. 8 auch alle diese verdeckten Strukturen enthalten.

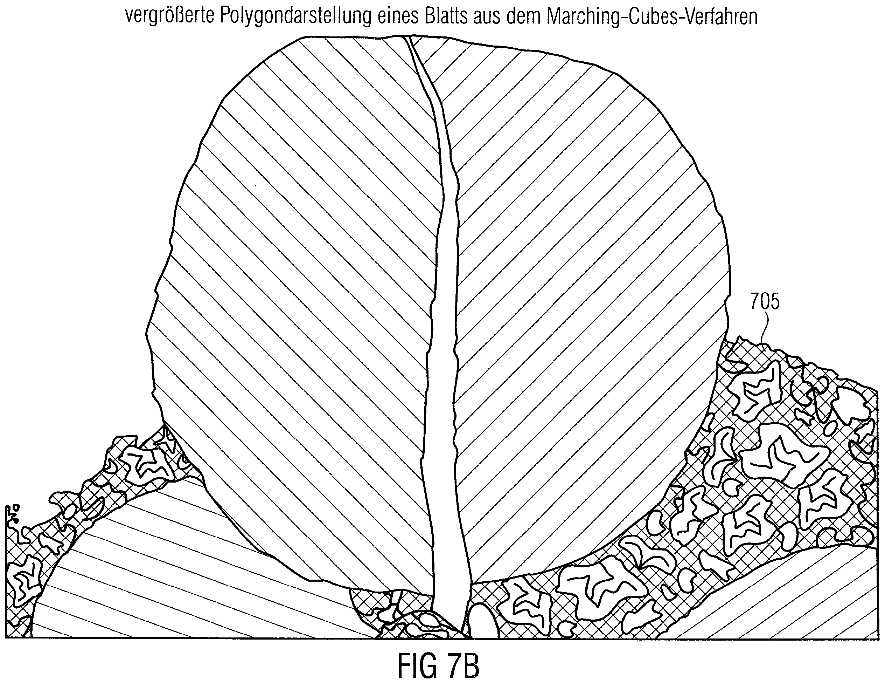

Fig. 7b zeigt eine vergrößerte Polygondarstellung eines Blatts, wie es aus dem Marching-Cubes-Verfahren erhalten wird, wobei schematisch in Fig. 7b einzelne Polygonflächen unterschiedlicher Größe gezeigt sind, wobei diese Darstellung in Fig. 7b bzw. der zugrunde liegende Datensatz dazu verwendet werden kann, um eine Segmentierung dahin gehend zu erreichen, dass das Blatt von seinem Stiel abgetrennt wird bzw. von dem Hintergrund 705 abgetrennt wird, um dann mit dem einzelnen Blatt, also dem Einzelelement ein Parameter-Fitting-Verfahren, wie es anhand des Blocks 264 in Fig. 6 beschrieben worden ist, durchzuführen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung zum Parametrisieren einer Pflanze (101), mit folgenden Merkmalen:
einem Aufzeichner (100) zum Aufzeichnen eines dreidimensionalen Datensatzes (102) der Pflanze, der nicht nur Volumenelemente von unverdeckten Elementen der Pflanze, sondern auch Volumenelemente von durch andere Elemente verdeckten Elementen der Pflanze aufweist; und
einem Parametrisierer (200) zum Parametrisieren des dreidimensionalen Datensatzes, um Pflanzenparameter (201) zu erhalten,
wobei der Parametrisierer (200) ausgebildet ist, um den dreidimensionalen Datensatz (102) in eine Punktwolke (221) umzuwandeln (220), wobei die Punktwolke nur noch Punkte auf einer Oberfläche der Pflanze oder Punkte einer Volumenstruktur der Pflanze aufweist,
wobei der Parametrisierer (200) ferner ausgebildet ist, um die dreidimensionale Punktwolke in Einzelelemente (241) der Pflanze zu segmentieren (240), wobei ein Einzelelement ein Blatt, ein Stiel, ein Zweig, ein Stamm, eine Blüte, eine Frucht, oder ein Blattgerippe ist, und
wobei der Parametrisierer ausgebildet ist, um unter Verwendung eines Einzelelementmodells (262) Parameter für das Einzelelement durch Anpassen des Einzelelementmodells an das Einzelelement zu berechnen (264).

2. Vorrichtung nach Anspruch 1 , bei der der Aufzeichner (100) ausgebildet ist, um ein Röntgen-Computertomographie-Verfahren oder ein Magnetresonanztomographie-Verfahren auszuführen, um den dreidimensionalen Datensatz zu erhalten, wobei ein Volumenelement des dreidimensionalen Datensatzes eine dreidimensionale Koordinate und wenigstens einen Intensitätswert aufweist.

3. Vorrichtung nach Anspruch 1 oder 2, wobei der Parametrisierer (200) ausgebildet ist, um die Punkte der Punktwolke nur durch eine Koordinate darzustellen, die von der Koordinate eines entsprechenden Volumenelements abgeleitet ist oder dieser entspricht.

4. Vorrichtung nach einem der Ansprüche 1 bis 3,
bei der das Einzelelement ein Blatt ist, und bei dem einer oder mehrere Pflanzenparameter (265) berechnet werden, wobei der eine oder die mehreren Pflanzenparameter aus der Gruppe ausgewählt sind, die folgende Pflanzenparameter aufweist:
eine Blattlänge, eine Blattbreite, eine Blattfläche, eine Neigung des Blatts bezüglich eines Stiels, eine Ausrichtung bezüglich einer Pflanzenhauptachse, eine Verdrehung bezüglich einer Blattachse, eine Blattwölbung, eine Blattform, eine Blattumrandung, Fehler in einer erwarteten Blattumrandung, eine Wellung am Rand oder in der Fläche des Blatts, eine Faltung der Blatthälften, oder eine Einrollung des Blatts entlang oder quer zur Blattachse.

5. Vorrichtung nach einem der Ansprüche 1 bis 4,
bei der der Parametrisierer (200) ausgebildet ist, um mittels eines Intensitäts-Schwellwerts Volumenelemente zu ermitteln, die zur Pflanze gehören, wobei die Punktwolke im Wesentlichen keine Punkte aufweist, die zu einem Hintergrund der Pflanze gehören.

6. Vorrichtung nach einem der Ansprüche 1 bis 5,
bei der der Parametrisierer (200) ausgebildet ist, um unter Verwendung eines Marching-Cubes-Verfahrens die Punktwolke zu ermitteln, die eine Grenzfläche zwischen der Pflanze und einem Hintergrund aufweist.

7. Vorrichtung nach einem der Ansprüche 1 bis 6,
bei der der Parametrisierer (200) ausgebildet ist, um zum Segmentieren (240) für Flächenelemente einer Oberfläche der Pflanze Oberflächennormalen zu ermitteln (243), und um anhand einer Untersuchung (250) der Oberflächennormalen für die Flächenelemente zu bestimmen, ob ein Punkt zu einem Einzelelement gehört oder nicht, oder
bei der der Parametrisierer (200) ausgebildet ist, um zum Segmentieren (240), für jeden der Punkte, eine lokale Nachbarschaft um einen Punkt zu bestimmen, eine Ebene in die Punkte der lokalen Nachbarschaft zu fitten und eine Normale auf diese Ebene zu bestimmen, die die Normale für diesen betrachtete Punkt ist.

8. Vorrichtung nach Anspruch 7,
bei der ein Punkt zu mindestens einer Mehrzahl von Polygonflächen gehört (242), wobei der Parametrisierer (200) ausgebildet ist, um für jede Polygonfläche der Mehrzahl von Polygonflächen, zu der der Punkt gehört, eine Normale (243) zu ermitteln, und um die Normalen der Polygonflächen, zu denen der Punkt gehört, zu mitteln (247), um eine Normale (248) für den Punkt zu ermitteln.

9. Vorrichtung nach Anspruch 8,
bei der die Polygonflächen der Mehrzahl von Polygonflächen unterschiedlich groß sind, wobei der Parametrisierer (200) ausgebildet ist, um eine gewichtete Mittelung (247) der Normalen durchzuführen, derart, dass eine Normale von einer Polygonfläche mit einer ersten Größe stärker in die gewichtete Mittelung eingeht als eine Normale einer Polygonfläche mit einer zweiten Größe, wobei die zweite Größe kleiner als die erste Größe ist.

10. Vorrichtung nach einem der Ansprüche 1 bis 9,
bei der der Aufzeichner (100) ausgebildet ist, um einen Szintillatorschirm (10) und eine Mehrzahl von Einzelkameras (16) zu verwenden, und um ein analoges Binning mit der Mehrzahl von Einzelkameras durchzuführen, um eine Aufnahme mit einer Strahlenbelastung durchzuführen, die reduziert ist im Vergleich zu einer Strahlenbelastung bei Verwendung einer einzigen Einzelkamera.

11. Verfahren zum Parametrisieren einer Pflanze (101), mit folgenden Merkmalen:
Aufzeichnen (100) eines dreidimensionalen Datensatzes (102) der Pflanze, der nicht nur Volumenelemente von unverdeckten Elementen der Pflanze, sondern auch Volumenelemente von durch andere Elemente verdeckten Elementen der Pflanze aufweist; und
Parametrisieren (200) des dreidimensionalen Datensatzes, um Pflanzenparameter (201) zu erhalten,
wobei das Parametrisieren folgende Schritte aufweist:
Umwandeln des dreidimensionalen Datensatzes (102) in eine Punktwolke (221), wobei die Punktwolke nur noch Punkte auf einer Oberfläche der Pflanze oder Punkte einer Volumenstruktur der Pflanze aufweist,
Segmentieren der dreidimensionalen Punktwolke in Einzelelemente (241) der Pflanze, wobei ein Einzelelement ein Blatt, ein Stiel, ein Zweig, ein Stamm, eine Blüte, eine Frucht, oder ein Blattgerippe ist, und
unter Verwendung eines Einzelelementmodells (262), Berechnen (264) von Parametern für das Einzelelement durch Anpassen des Einzelelementmodells an das Einzelelement.

12. Computerprogramm zum Ausführen des Verfahrens zum Parametrisieren einer Pflanze nach Patentanspruch 11, wenn das Computerprogramm auf einem Computer oder Prozessor läuft.

## Claims

1. Apparatus for parameterizing a plant (101), comprising:
a recorder (100) for recording a three-dimensional data set (102) of the plant, which does not only comprise volume elements of non-covered elements of the plant, but also volume elements of elements of the plant that are covered by other elements;
a parameterizer (200) for parameterizing the three-dimensional data set for acquiring plant parameters (201),
wherein the parameterizer (200) is implemented to convert (220) the three-dimensional data set (102) into a point cloud (221), wherein the point cloud only comprises points on a surface of the plant or points of a volume structure of the plant,
wherein the parameterizer (200) is further implemented to segment (240) the three-dimensional point cloud into single elements (241) of the plant, wherein a single element is a leaf, a stem, a branch, a trunk, a blossom, a fruit or a leaf skeleton, and
wherein the parameterizer is implemented to calculate (264), by using a single-element model (262), parameters for the single element by adapting the single-element model to the single element.

2. Apparatus according to claim 1, wherein the recorder (100) is implemented to perform an X-ray computer tomography method or a magnetic resonance tomography method for acquiring the three-dimensional data set, wherein a volume element of the three-dimensional data set comprises a three-dimensional coordinate and at least one intensity value.

3. Apparatus according to claim 1 or 2, wherein the parameterizer (200) is implemented to represent the points of the point cloud only by a coordinate derived from the coordinate of a respective volume element or corresponding to the same.

4. Apparatus according to any of claims 1 to 3,
wherein the single element is a leaf and wherein one or several plant parameters (265) are calculated, wherein the one or several plant parameters are selected from the group comprising the following plant parameters:
a leaf length, a leaf width, a leaf area, an inclination of a leaf with regard to the stem, an orientation with regard to a plant main axis, a twist with regard to a leaf axis, a leaf arch, a leaf shape, a leaf outline, errors in an expected leaf outline, corrugations at the edge or in the area of the leaf, a folding of the leaf halves, or rolling-in of the leaf along or transversal to the leaf axis.

5. Apparatus according to any of claims 1 to 4,
wherein the parameterizer (200) is implemented to determine, by means of an intensity threshold, volume elements belonging to the plant, wherein the point cloud essentially comprises no points belonging to a background of the plant.

6. Apparatus according to any of claims 1 to 5,
wherein the parameterizer (200) is implemented to determine the point cloud, which comprises an interface between the plant and a background, by using a marching cubes method.

7. Apparatus according to any of claims 1 to 6,
wherein the parameterizer (200) is implemented to determine (243) surface normals for area elements of a surface of the plant for segmenting (240), and to determine for the area elements, based on an examination (250) of the surface normal, whether a point belongs to a single element or not,
wherein the parameterizer (200) is implemented to determine, for segmenting (240), for each of the points, a local neighborhood around a point, to fit a plane into the points of the local neighborhood and to determine a normal onto this plane which is the normal for this considered point.

8. Apparatus according to claim 7,
wherein a point belongs (242) to at least a plurality of polygon areas, wherein the parameterizer (200) is implemented to determine, for each polygon area of the plurality of polygon areas to which the point belongs, a normal (243), and to average (247) the normals of the polygon areas to which the point belongs for determining a normal (248) for the point.

9. Apparatus according to claim 8,
wherein the polygon areas of the plurality of polygon areas have different sizes, wherein the parameterizer (200) is implemented to perform weighted averaging (247) of the normal, such that a normal of a polygon area with a first size is incorporated more into the weighted averaging than a normal of a polygon area having a second size, wherein the second size is smaller than the first size.

10. Apparatus according to any of claims 1 to 9,
wherein the recorder (100) is implemented to use a scintillator screen (10) and a plurality of single cameras (16) and to perform analog binning with the plurality of single cameras to perform capturing with a radiation exposure that is reduced compared to a radiation exposure when using only one single camera.

11. Method for parameterizing a plant (101), comprising:
recording (100) a three-dimensional data set (102) of the plant, which does not only comprise volume elements of non-covered elements of the plant, but also volume elements of elements of the plant that are covered by other elements; and
parameterizing (200) the three-dimensional data set for acquiring plant parameters (201),
wherein parameterizing comprises:
converting the three-dimensional data set (102) into a point cloud (221), wherein the point cloud only comprises points on a surface of the plant or points of a volume structure of the plant,
segmenting the three-dimensional point cloud into single elements (241) of the plant, wherein a single element is a leaf, a stem, a branch, a trunk, a blossom, a fruit or a leaf skeleton, and
calculating (264), by using a single-element model (262), parameters for the single element by adapting the single-element model to the single element.

12. Computer program for performing the method for parameterizing a plant according to a claim 11 when the computer program runs on a computer or processor.

## Revendications

1. Dispositif de paramétrage d'une plante (101), aux caractéristiques suivantes:
un enregistreur (100) destiné à enregistrer un ensemble de données tridimensionnel (102) de la plante présentant non seulement des éléments de volume d'éléments découverts de la plante, mais également des éléments de volume d'éléments de la plante couverts par d'autres éléments: et
un paramétreur (200) destiné à paramétrer l'ensemble de données tridimensionnel pour obtenir les paramètres de la plante (201),
dans lequel le paramétreur (200) est conçu pour convertir (220) l'ensemble de données tridimensionnel (102) en un nuage de points (221), où le nuage de points ne présente plus que des points sur une surface de la plante ou des points d'une structure de volume de la plante,
dans lequel le paramétreur (200) est par ailleurs conçu pour segmenter (240) le nuage de points tridimensionnel en éléments individuels (241) de la plante, où un élément individuel est une feuille, une tige, une branche, un tronc, une fleur, un fruit ou un squelette de feuille, et
dans lequel le paramétreur est conçu pour calculer (264), à l'aide d'un modèle d'élément individuel (262), des paramètres pour l'élément individuel en adaptant le modèle d'élément individuel à l'élément individuel.

2. Dispositif selon la revendication 1, dans lequel l'enregistreur (100) est conçu pour réaliser un procédé de tomographie par rayons X assistée par ordinateur ou un procédé de tomographie par résonance magnétique pour obtenir l'ensemble de données tridimensionnel, dans lequel un élément de volume de l'ensemble de données tridimensionnel présente une coordonnée tridimensionnelle et au moins une valeur d'intensité.

3. Dispositif selon la revendication 1 ou 2, dans lequel le paramétreur (200) est conçu pour ne représenter les points du nuage de points que par une coordonnée qui est dérivée de la coordonnée d'un élément de volume correspondant ou qui correspond à cette dernière.

4. Dispositif selon l'une des revendications 1 à 3,
dans lequel l'élément individuel est une feuille, et dans lequel sont calculés un ou plusieurs paramètres de plante (265), dans lequel l'un ou les plusieurs paramètres de plante sont sélectionnés parmi le groupe présentant les paramètres de plante suivants:
une longueur de feuille, une largeur de feuille, une surface de feuille, une inclinaison de la feuille par rapport à une tige, une orientation par rapport à un axe principal de la plante, une rotation par rapport à un axe de la feuille, une courbure de la feuille, une forme de feuille, un contour de feuille, une anomalie dans le contour de feuille attendu, une ondulation au bord ou dans la surface de la feuille, un pliage des moitiés de la feuille ou un enroulement de la feuille le long de ou de manière transversale à l'axe de la feuille.

5. Dispositif selon l'une des revendications 1 à 4,
dans lequel le paramétreur (200) est conçu pour déterminer, au moyen d'une valeur de seuil d'intensité, les éléments de volume appartenant à la plante, où le nuage de points ne présente substantiellement pas de points appartenant à un arrière-plan de la plante.

6. Dispositif selon l'une des revendications 1 à 5,
dans lequel le paramétreur (200) est conçu pour déterminer, à l'aide d'un procédé de "marching cubes", le nuage de points qui présente une interface entre la plante et un arrière-plan.

7. Dispositif selon l'une des revendications 1 à 6,
dans lequel le paramétreur (200) est conçu pour déterminer (243), en vue de segmenter (240), des normales de surface pour des éléments de surface d'une surface de la plante, et pour déterminer, à l'aide d'une étude (250) des normales de surface pour les éléments de surface, si un point appartient ou non à un élément individuel, ou
dans lequel le paramétreur (200) est conçu pour déterminer, en vue de segmenter (240), pour chacun des points un voisinage local autour d'un point, un plan dans lequel entrent des points du voisinage local et une normale sur ce plan qui est la normale pour ce point considéré.

8. Dispositif selon la revendication 7,
dans lequel un point appartient à au moins une pluralité de surfaces polygonales (242), dans lequel le paramétreur (200) est conçu pour déterminer une normale (243) pour chaque surface polygonale de la pluralité de surfaces polygonales à laquelle appartient le point, et calculer la moyenne des normales des surfaces polygonales auxquelles appartient le point (247) pour déterminer une normale (248) pour le point.

9. Dispositif selon la revendication 8,
dans lequel les surfaces polygonales de la pluralité de surfaces polygonales sont de grandeur différente, dans lequel le paramétreur (200) est conçu pour effectuer un calcul de la moyenne pondérée (247) des normales de sorte qu'une normale d'une surface polygonale d'une première grandeur entre plus fortement dans le calcul de la moyenne pondérée qu'une normale d'une surface polygonale d'une deuxième grandeur, la deuxième grandeur étant inférieure à la première grandeur.

10. Dispositif selon l'une des revendications 1 à 9,
dans lequel l'enregistreur (100) est conçu pour utiliser un écran à scintillateur (10) et une pluralité de caméras individuelles (16) et pour effectuer un regroupement analogique par la pluralité de caméras individuelles pour réaliser une prise de vue avec une exposition au rayonnement qui est réduite en comparaison avec l'exposition au rayonnement lors de l'utilisation d'une seule caméra.

11. Procédé de paramétrage d'une plante (101), aux caractéristiques suivantes consistant à:
enregistrer (100) un ensemble de données tridimensionnel (102) de la plante qui présente non seulement des éléments de volume découverts de la plante, mais également des éléments de volume d'éléments de la plante couverts par d'autres éléments; et
paramétrer (200) l'ensemble de données tridimensionnel pour obtenir les paramètres de plante (201),
dans lequel le paramétrage présente les étapes suivantes consistant à:
convertir l'ensemble de données tridimensionnel (102) en un nuage de points (221), où le nuage de points ne présente plus que des points sur une surface de la plante ou des points d'une structure de volume de la plante,
segmenter le nuage de points tridimensionnel en éléments individuels (241) de la plante, où un élément individuel est une feuille, une tige, une branche, un tronc, une fleur, un fruit ou un squelette de feuille, et
calculer (264), à l'aide d'un modèle d'élément individuel (262), les paramètres de l'élément individuel en adaptant le modèle d'élément individuel à l'élément individuel.

12. Programme d'ordinateur pour réaliser le procédé de paramétrage d'une plante selon la revendication 11 lorsque le programme d'ordinateur est exécuté sur un ordinateur ou un processeur.
